# EUROPEAN PATENT APPLICATION

(11) **EP 3 771 931 A1**
(43) Date of publication of application: **03.02.2021**
(21) Application number: 19211834.7
(22) Date of filing: 27.11.2019
(51) Int. Cl.: G02B 5/122, B60Q 1/56

(54) **CUBE CORNER TYPE RETROREFLECTIVE SHEET AND MANUFACTURING METHOD THEREOF**

(30) Priority: 02.08.2019 KR 20190094168
(71) Applicant: Reflomax Co., Ltd., Gyeonggi-do 18525 (KR)
(72) Inventor: HAN, Jin Wook, 16491 Gyeonggi-do (KR)
(74) Representative: KIPA AB

(57) **Abstract**

The present disclosure relates to a cube corner type retroreflective sheet having cube corner elements, characterized in that the sheet comprises: a base layer; a print layer arranged at one side of the base layer; a plurality of cube corner elements that bond to the print layer, have a flat observation surface at one surface facing toward the print layer, and have a structure surface at the opposite surface; and an adhesive layer that bonds to the cube corner elements such that a portion of the structure surface of the cube corner elements is buried.

## Description

### 1. Field

The present disclosure relates to a cube corner type retroreflective sheet and manufacturing method thereof, and more specifically, to a cube corner type retroreflective sheet that can absorb infrared rays and improve the whiteness at the same time in the cube corner type retroreflective sheet and manufacturing method thereof.

### 2. Background

In general, a retroreflective material has a characteristic of returning the light incident on the material towards the direction of the light source. Due to this characteristic, the retroreflective sheet is being widely used for traffic safety and individual safety, etc. The retroreflective sheet is generally used in various types of objects such as road markings, barricades, vehicle license plates, road stripes, marking tapes, and retroreflective tapes for use in vehicles and clothing.

There are two types of sheets known as retroreflective sheets: cube corner sheets and glass beads sheets. In general, the glass beads sheet is used by combining numerous micro-lens and regular reflection or diffusion reflection materials (for example, pigment particles, metal flakes and deposition coating) included in binder layers, to retroreflect incident rays. The cube corner sheet generally has a thin transparent layer consisting of a flat first observation surface and a second structure surface having a plurality of geometrical structures, thus providing three reflecting surfaces where a portion of or an entirety of the structure is configured as a cube corner element.

Recently, applying the retroreflective sheet to vehicle license plates is being proposed with a purpose to increase the visibility of the vehicle license plates.

Conventional automatic license plate recognition systems (for example, ALPR systems and automated license plate reader systems) are configured to irradiate light and then recognize the license plate through the light returning back from the license plate.

When using a general license plate recognition system which irradiates infrared rays, the intense irradiation of infrared rays causes halation (a blurring phenomenon just like the ring seen around the moon), making it difficult to recognize the license plate.

Changing the setting of the infrared ray irradiation intensity in the cameras is one way of resolving this problem, but that would cost a lot of money, and further, in some installed cameras, changing the irradiation intensity is not possible.

Accordingly, as a way to improve the structure of the license plate itself, a license plate was proposed to include a material that does not transmit infrared rays. However, this caused a problem of lowering the whiteness at the same time in cases where white color license plates were used.

A purpose of the present disclosure is to resolve the problems of prior art described above, that is to provide a cube corner type retroreflective sheet that may improve the whiteness, and manufacturing method thereof.

Further, another purpose of the present disclosure is to provide a cube corner type retroreflective sheet that may absorb infrared rays to reduce the halation phenomenon, and manufacturing method thereof.

The purposes of the present disclosure described above may be achieved by a cube corner type retroreflective sheet according to an embodiment of the present disclosure comprising: a base layer; a print layer arranged at one side of the base layer; a plurality of cube corner elements that bond to the print layer, have a flat observation surface at one surface facing toward the print layer, and have a structure surface at the opposite surface; and an adhesive layer that bonds to the cube corner elements such that a portion of the structure surface of the cube corner elements is buried.

Here, the adhesive layer may include at least one of a whiteness enhancing material and an infrared ray non-transmissive material.

Further, the print layer may include at least one of a whiteness enhancing material and an infrared ray non-transmissive material.

Further, a height of a region where the cube corner element is buried by the adhesive layer is preferably equal to or greater than a height of a region where the cube corner element is not buried.

Further, the print layer may be formed between the base layer and the cube corner element.

Further, a hologram layer may be further formed between the base layer and the print layer.

Further, the base layer may absorb or reflect an ultraviolet ray of incident light.

Further, the base layer may be provided in a single or multi-layer structure, and an outermost surface may be surface-treated to be hydrophilic or hydrophobic.

A manufacturing method of a cube corner type retroreflective sheet having cube corner elements is provided, the method including the steps: forming a base layer; forming a print layer at one side of the base layer; forming a cube corner layer at one side of the print layer, and then forming a plurality of cube corner elements having a flat observation surface at one surface facing toward the print layer and having a structure surface at the opposite surface, by using a mold; and forming an adhesive layer such that a portion at the structure surface side of the cube corner element is buried.

Here, forming a hologram layer between the base layer and the print layer may be further included.

The purposes of the present disclosure described above may be achieved by a cube corner type retroreflective sheet according to another embodiment of the present disclosure, wherein the cube corner type retroreflective sheet includes a cube corner module sheet that includes a plurality of cube corner elements having a flat observation surface at one surface and having a structure surface at the opposite surface, an adhesive layer that bonds to the cube corner elements such that a portion at the structure surface side of the cube corner element is buried, and a base layer formed at the observation surface side of the cube corner elements; and a print structure module sheet that includes a print layer and that bonds to the base layer of the cube corner module sheet.

Here, the adhesive layer may include at least one of a whiteness enhancing material and an infrared ray non-transmissive material.

Further, the print layer may include at least one of a whiteness enhancing material and an infrared ray non-transmissive material.

Further, the base layer may absorb or reflect an ultraviolet ray of incident light.

Further, the print structure module sheet may further include an overlay layer formed at one side of the print layer.

The overlay layer may absorb or reflect an ultraviolet ray of incident light.

Further, the overlay layer may be provided in a single or multi-layer structure, and an outermost surface may be surface-treated to be hydrophilic or hydrophobic.

Further, the print structure module sheet may further include a hologram layer formed between the overlay layer and the print layer.

Further, a height of a region where the cube corner element is buried by the adhesive layer may be equal to or greater than a height of a region where the cube corner element is not buried.

A manufacturing method of a cube corner type retroreflective sheet according to another embodiment of the present disclosure is provided, wherein the method may include preparing a cube corner module sheet comprising a plurality of cube corner elements having a flat observation surface at one surface and a structure surface at the opposite surface; and preparing a print structure module sheet that includes a print layer, and bonding the print structure module sheet to the cube corner modules sheet at an observation surface side.

Here, the cube corner module sheet may be manufactured by further including forming a cube corner layer at one side of the base layer, and forming a plurality of cube corner elements having the flat observation surface at one surface and having the structure surface at the opposite surface, using a mold; and forming an adhesive layer such that a portion at the structure surface side of the cube corner element is buried.

Further, the print structure module sheet may be manufactured by further including forming an overlay layer at one side of the print layer; and forming an adhesive agent layer at a surface of the opposite side of the print layer.

Further, forming a hologram layer between the overlay layer and the print layer may be further included. The purposes of the present disclosure described above may be achieved by a cube corner type retroreflective sheet according to another embodiment of the present disclosure, wherein the cube corner type retroreflective sheet includes a cube corner module sheet including a plurality of cube corner elements having a flat observation surface at one surface and having a structure surface at the opposite surface, and an adhesive layer that bonds to the cube corner elements such that a portion of the structure surface of the cube corner element is buried; and a print layer that bonds to the cube corner module sheet.

According to the present disclosure, a cube corner type retroreflective sheet that may improve the whiteness, and manufacturing method thereof are provided.

Further, a cube corner type retroreflective sheet that may absorb infrared rays to reduce the halation phenomenon, and manufacturing method thereof are provided.

### BRIEF DESCRIPTION OF THE DRAWINGS

FIG. 1 is a schematic view of a cube corner type retroreflective sheet according to a first embodiment of the present disclosure;
FIG. 2 is a plane view of a cube corner element of FIG. 1;
FIG. 3 is a plane view of the cube corner element and an adhesive layer of FIG. 1;
FIG. 4 is a flowchart of a manufacturing method of the cube corner type retroreflective sheet according to the first embodiment of the present disclosure;
FIG. 5 is a view illustrating a state of operation of the cube corner type retroreflective sheet according to the first embodiment of the present disclosure;
FIG. 6 is a schematic view of the cube corner type retroreflective sheet according to a second embodiment of the present disclosure;
FIG. 7 is a flowchart of a manufacturing method of the cube corner type retroreflective sheet according to the second embodiment of the present disclosure; and
FIG. 8 is a view illustrating a state of operation of the cube corner type retroreflective sheet according to the second embodiment of the present disclosure.

### DETAILED DESCRIPTION

Prior to the description, it is to be noted that in numerous embodiments of the present disclosure, for components of like configurations, description will be made with reference to the first embodiment as a representative using like reference numerals, and in other embodiments, description will be made on configurations that are different from the first embodiment.

Hereinbelow, the cube corner type retroreflective sheet according to a first embodiment of the present disclosure will be described in detail with reference to the attached drawings.

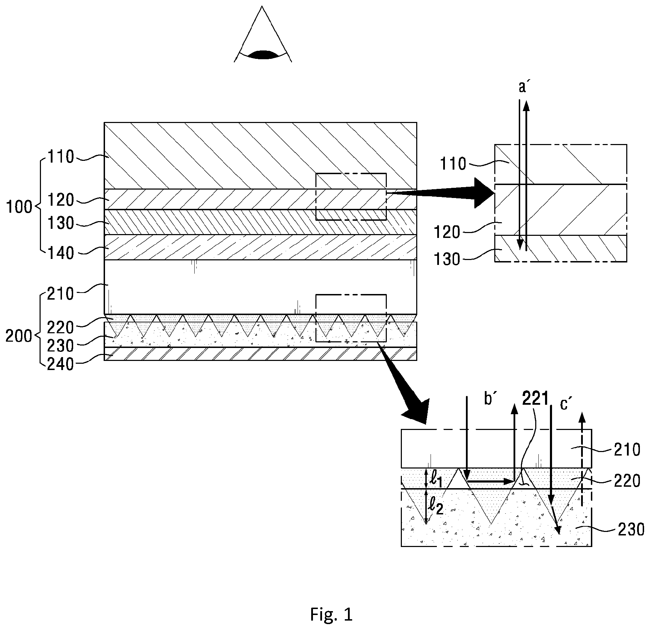

FIG. 1 is a schematic view of the cube corner type retroreflective sheet according to the first embodiment of the present disclosure. Referring to FIG. 1, the cube corner type retroreflective sheet according to the first embodiment of the present disclosure consists of a base layer 10, a hologram layer 20, a print layer 30, a cube corner element 40, an adhesive layer 50 and a release film 60, and also includes an upper surface and a rear surface on the opposite side of the upper surface.

The base layer 10 is a component provided in the form of a film and that becomes the parent material. The thickness of the base layer 10 is 19 *µ*m to 250 *µ*m.

The base layer 10 may include at least one of polymethyl methacrylate-based, vinyl-based, polychlorotrifluoroethylene-based, polyvinylidene fluoride-based, polyvinyl fluoride-based, silicon-based, and polyurethane-based, but is not limited to the materials listed above.

The base layer 10 may absorb or reflect light in the ultraviolet (UV) region band (250nm to 400nm) of light incident from outside, thereby preventing ultraviolet rays from reaching the configuration below the base layer.

In addition, the base layer 10 may be formed in a single or multi-layer structure, and a surface of an outermost layer of the base layer 10 may be surface-treated to have a hydrophilic or hydrophobic material, thereby improving the antifouling effect (pollution resistance).

The hologram layer 20 is formed to have an embossing shape on a rear surface side of the base layer 10, and the hologram layer 20 diffracts light incident from outside so that the light is totally reflected at the cube corner element 40 located under the hologram layer 20.

The print layer 30 is made of transparent ink and is formed on a rear surface side of the hologram layer 20 in various patterns such as dots, grids and the like.

The print layer 30 may include a whiteness enhancing material such as zinc oxide (ZnO), titanium dioxide (TO₂), zinc sulfide (ZnS), lithophone, hydrated alumina (ATH), calcium carbonate (CaCO₃), barium sulfate (BaSO₄), barytes, talc, silica (SiO₂) and the like that may enhance the whiteness.

Further, the print layer 30 may include an infrared ray non-transmissive material to absorb infrared rays incident from outside and to absorb a portion of infrared rays that are not absorbed but retroreflected from the cube corner element 40 that will be described hereinafter.

Here, the infrared ray non-transmissive material refers to a material that absorbs or diffuses infrared rays and does not substantially allow the infrared rays to be transmitted.

The infrared ray non-transmissive organic materials include carbon black, polymethine type compounds, pyrylium type compounds, thiopyrylium type compounds, squalarium type compounds, croconium type compounds, azulenium type compounds, phthalocyanine type compounds, tetrahydrocholine type compounds, dithiol metal complex salt type compounds, naphthoquinone type compounds, antimonate type compounds, anthraquinone type compounds, triphenylmethane type compounds, aminium type compounds, dimonium type compounds, and the like.

In addition, infrared ray non-transmissive inorganic materials include compounds such as antimony tin oxide (ATO), indium tin oxide (ITO), tin oxide, tin antimony oxide, titanium dioxide, iron oxide, aluminum, tin-lead alloy, gold, silver, and the like.

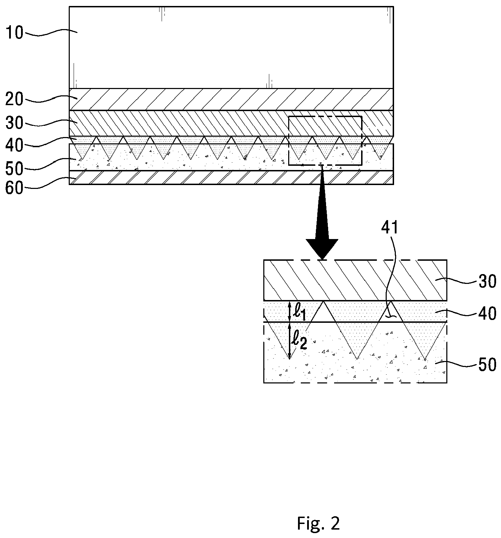

FIG. 2 is a plane view of the cube corner element of FIG. 1. Referring to FIGs. 1 and 2, the cube corner element 40 is formed in a prism shape on a rear surface of the print layer 30.

Here, the cube corner element has a flat observation surface and a pyramidal shape structure surface, the flat observation surface being located at the print layer 30 side and the pyramidal shape structure surface being located at the opposite side.

Typically, the cube corner element 40 is known to have a retroreflectivity of approximately 60^{∼}70%. That is, a region 40a where external light is retroreflected is located inside, and a region 40b where external light is lost without being retroreflected is formed at a prism shaped end region of all corners of the cube corner element 40.

The cube corner element 40 may include the infrared ray non-transmissive material described above. The material of the cube corner element 40 may be urethane acrylate-based, epoxy-based, and the like, but is not limited to the materials listed above.

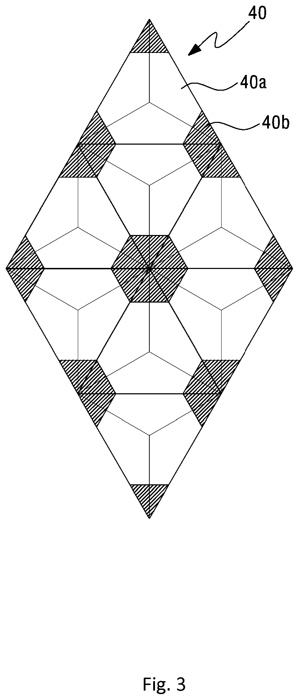

FIG. 3 is a plane view of the cube corner element and adhesive layer of FIG. 1. Referring to FIGs. 1 and 3, the adhesive layer 50 is a UV-dry type adhesive agent or heat-dry type adhesive agent, and the adhesive layer 50 is formed such that a portion at the structure surface side of the cube corner element 40 is buried. Accordingly, in the region where a portion of the structure surface is buried in the adhesive agent, retroreflection of external light is lost, as in the region 40b where external light is lost without being retroreflected.

Here, as for the depth of the cube corner element being buried, a height ℓ₂ of the buried region is preferably equal to or greater than a height ℓ₁ of the non-buried region, that is, the height of the buried region is preferably 1/2 or more of the height of the cube corner element 40.

Further, the adhesive layer 50 may include at least one of the whiteness enhancing material and the infrared ray non-transmissive material, as in the print layer 30.

As a result, by adjusting the depth of the cube corner element being buried in the adhesive layer 50, it is possible to adjust the whiteness by the whiteness enhancing material and the reflectivity of the retroreflective sheet.

The release film 60 is a component provided to be removable when attached to an attachment object, and the release film 60 may be bonded to a rear surface of the adhesive layer 50.

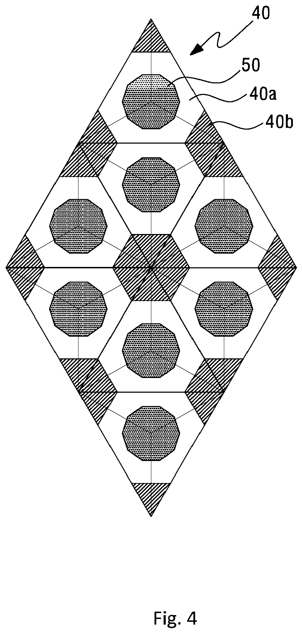

Next, a manufacturing method of the cube corner type retroreflective sheet described above will be explained. FIG. 4 is a flowchart of the manufacturing method of the cube corner type retroreflective sheet according to a first embodiment of the present disclosure.

Referring to FIG. 4, the manufacturing method of the cube corner type retroreflective sheet according to the first embodiment of the present disclosure is as follows. First of all, a material that includes an inorganic substance and the like is applied on a rear surface of the base layer 10, and a process such as micro etching and the like is applied so as to include a pattern such as embossing and the like, to form a hologram layer 20 (S10).

Here, the base layer 10 may be made of at least one of polymethyl methacrylate-based, vinyl-based, polychlorotrifluoroethylene-based, polyvinylidene fluoride-based, polyvinyl fluoride-based, silicon-based, and polyurethane-based, but is not limited to the materials listed above.

Next, a transparent ink that includes at least one of the infrared ray non-transmissive material and the whiteness enhancing material is applied on a rear surface of the hologram layer 20, and the print layer 30 is formed to have various patterns such as dots, grids and the like (S20).

After applying a material to form a cube corner element 40 on a rear surface of the print layer 30 and thus forming a cube corner layer, a predetermined mold is pressurized on the cube corner layer, and the cube corner layer is hardened by applying UV imprint and the like, thereby forming a plurality of cube corner elements 40 where an upper surface thereof has a flat observation surface, and a rear surface side thereof has a structure surface (S30). Here, the material used for the cube corner layer may be urethane acrylate-based or epoxy-based and the like, but is not limited to the materials listed above.

An adhesive layer 50 is formed such that a portion at the structure surface side of the cube corner element 40 is buried (S40). Here, by adjusting the hardness of the adhesive layer 50, it is possible to adjust the extent by which the portion of the cube corner element 40 is buried.

Here, the hardness of the adhesive layer 50 may be adjusted by the method of adjusting the content or concentration of the components included in the adhesive agent or by adding the adhesive agent and the like.

In addition, the adhesive agent used in the adhesive layer 50 may include the whiteness enhancing material or the infrared non-transmissive material.

Further, on the rear surface of the adhesive layer 50, a release film 60 provided to be removable when used is attached (S50). By the method described above, the cube corner type retroreflective sheet according to the first embodiment of the present disclosure may be manufactured.

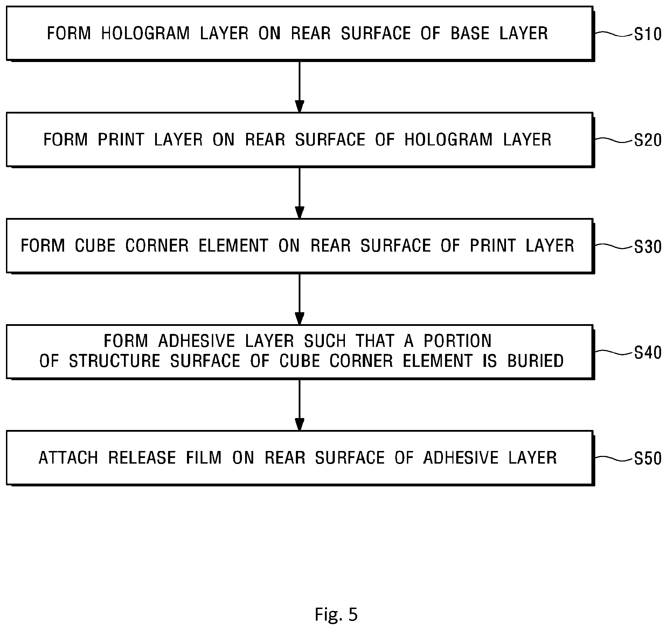

FIG. 5 is a view illustrating a state of operation of the cube corner type retroreflective sheet according to the first embodiment of the present disclosure. Referring to FIG. 5, when external light is incident on the cube corner type retroreflective sheet according to the first embodiment of the present disclosure, the incident light passes through the base layer 10, and is then diffracted through the hologram layer 20, to reach the print layer 30.

Here, UV light include in the light incident on the base layer 10 is partially absorbed or reflected, and partially transmitted downwards. A portion of the light that reached the print layer 30 passes through the print layer 30 while another portion of the light that reached the print layer 30 is reflected, wherein a portion of the infrared rays of the passed light is absorbed by the infrared ray non-transmissive material. Further, the whiteness of the light a being reflected may be enhanced by the whiteness enhancing material included in the print layer 30, and the light a may be reflected to outside.

Further, the light that passed through the print layer 30 becomes incident on the cube corner element 40, wherein a portion of the light b incident on the cube corner element 40 is retroreflected and another portion of the light b incident on the cube corner element 40 is absorbed or refracted.

Specifically, in the region ℓ₁ where the cube corner element 40 is not buried in the adhesive layer 50, through a relatively big difference of refractive index (approximately 0.5) between the refractive index (refractive index 1.0) of air of a space 41 and the refractive index (refractive index 1.4^{∼}1.6) of the cube corner element 40, retroreflection occurs.

In addition, in the region ℓ₂ where the cube corner element 40 is buried in the adhesive layer 50, due to a relatively small difference of refractive index (smaller than 0.5) between the cube corner element 40 and the adhesive layer 50, as can be seen from c, the light is transmitted to the adhesive layer 50 or refracted to another direction, and thus substantially almost no retroreflection occurs.

As a result, by configuring the cube corner element 40 to be partially buried in the adhesive layer 50, it is possible to reduce the light being retroreflected, thereby reducing the reflectivity of the retroreflective sheet.

Meanwhile, by the infrared non-transmissive material included in the cube corner element 40, the infrared ray of the light incident on the cube corner element 40 may be partially absorbed. Further, in the adhesive layer 50, a portion, albeit a very small amount, of the light may be reflected back and emitted to outside. When using the cube corner type retroreflective sheet according to the present disclosure as described above, it is possible to enhance the whiteness while moderately absorbing the infrared rays from the light incident from outside. That is, it is possible to significantly improve the visibility of a license plate, from the point of view of the observer.

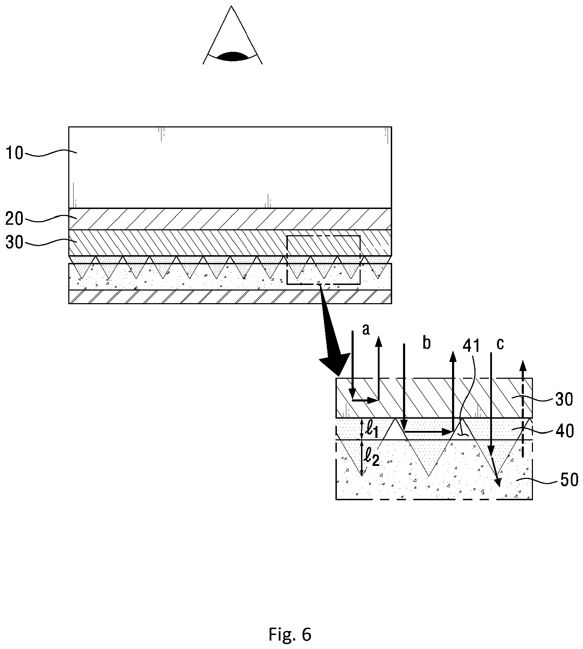

Next, the cube corner type retroreflective sheet according to a second embodiment of the present disclosure will be explained. FIG. 6 is a schematic view of the cube corner type retroreflective sheet according to the second embodiment of the present disclosure. Referring to FIG. 6, the cube corner type retroreflective sheet according to the second embodiment of the present disclosure consists of a cube corner module sheet 200 and a print structure module sheet 100, and includes an upper surface and a rear surface on the opposite side of the upper surface.

The cube corner module sheet 200 is configured to include a base layer 210, a cube corner element 220, and an adhesive layer 230. The base layer 210, the cube corner element 220, and the adhesive layer 230 are identical to those in the first embodiment described above, and thus detailed explanation will be omitted.

The print structure module sheet 100 is configured to include an overlay layer 110, a hologram layer 120, a print layer 130, and an adhesive agent layer 140.

The overlay layer 110 is configured to absorb or reflect the light in the ultraviolet (UV) region band (250nm ^{∼} 400nm) of the light incident from outside to prevent the UV rays from reaching the lower configuration. Further, the overlay layer 110 may have a color by adding a color pigment and the like.

In addition, the overlay layer 110 may be formed in a single or multi-layer structure, wherein a surface of an outermost layer thereof is surface-treated to have a hydrophilic or hydrophobic material, thereby improving the antifouling effect (pollution resistance).

The hologram layer 120 is formed on a rear surface of the overlay layer 110, and the hologram layer 120 may be formed in the same manner as the hologram layer 120 of the first embodiment.

The print layer 130 is formed on a rear surface of the hologram layer 120 in the same manner as in the first embodiment, and the print layer 130 may include at least one of the whiteness enhancing material and the infrared ray non-transmissive material.

The adhesive agent layer 140 is formed on a rear surface of the print layer 130 in the same form as the adhesive layer in the first embodiment, and the adhesive agent layer 140 may include at least one of the whiteness enhancing material and the infrared ray non-transmissive material.

The cube corner type retroreflective sheet according to the second embodiment as described above may absorb or reflect UV light from the overlay layer 110 of the print structure module sheet 100 and thus remove the UV light, and at the print layer 130 and the adhesive agent layer 140 located under the overlay layer, the infrared rays may be primarily absorbed by the infrared ray non-transmissive material and the whiteness may be enhanced by the whiteness enhancing material at the same time.

Further, as for the light that transmitted the print structure module sheet 100, at the cube corner module sheet located under the print structure module sheet 100, the infrared rays may be secondarily absorbed by the infrared ray non-transmissive material of the cube corner element 220 and the adhesive layer 230, and the whiteness may be enhanced by the whiteness enhancing material of the adhesive layer 230.

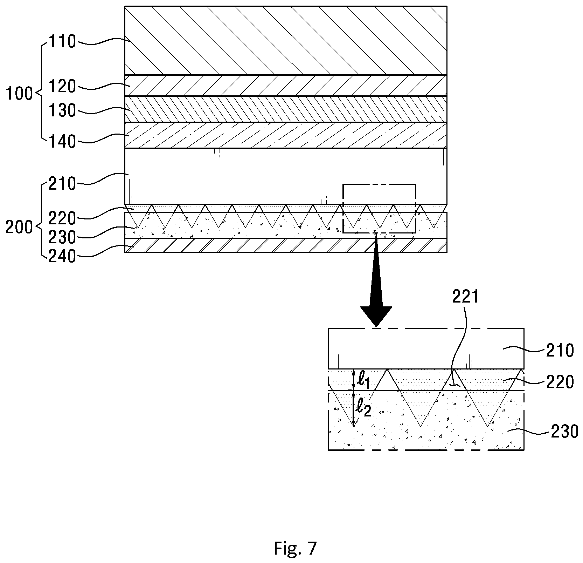

Next, a manufacturing method of the cube corner type retroreflective sheet according to the second embodiment described above will be explained. FIG. 7 is a flowchart of the manufacturing method of the cube corner type retroreflective sheet according to the second embodiment of the present disclosure. Referring to FIG. 7, the manufacturing method of the cube corner type retroreflective sheet according to the second embodiment of the present disclosure includes preparing a cube corner module sheet 200 (S100), preparing a print structure module sheet 100 (S200), and bonding a base layer 210 of the cube corner module sheet 200 and an adhesive agent layer 140 of the print structure module sheet 100 to each other (S300).

In the manufacturing method of the cube corner type retroreflective sheet according to the second embodiment, the same configuration as in the first embodiment can be manufactured by the same method as in the first embodiment, and thus detailed description thereof will be omitted.

The manufacturing method of the cube corner module sheet 200 includes having the base layer 210 as a parent material and forming a cube corner layer on a rear surface of the base layer 210, forming a plurality of cube corner elements 220 in the same method as in the first embodiment using a predetermined mold, and forming an adhesive layer 230 such that a portion at a structure surface side of the cube corner element 220 is buried. Further, a removable release film 240 is attached to a lower portion of the adhesive layer 230.

Here, as for the depth of the portion at the structure surface side of the cube corner element being buried, the height ℓ₂ of the buried region is preferably equal to or greater than the height ℓ₁ of the non-buried region, that is, the height of the buried region is preferably 1/2 or more of the height of the cube corner element 220. Through this, it is possible to improve the adhesiveness of the adhesive layer 230 and the retroreflective performance of the cube corner element.

In addition, the manufacturing method of the print structure module sheet 100 is as follows. A material that includes an inorganic substance and the like is applied on a rear surface of the overlay layer 110, and then a hologram layer 120 that includes a pattern such as embossing and the like is formed by a method such as micro-etching and the like. Further, a print layer 130 is formed on a rear surface of the hologram layer 120, and an adhesive agent layer 140 is formed on a rear surface of the print layer 130. The overlay layer 110 may include at least one of polymethyl methacrylate-based, polychlorotrifluoroethylene-based, polyvinylidene fluoride-based, polyvinyl fluoride-based, silicon-based, and polyurethane-based, but is not limited to the materials listed above.

The print layer 130 may be formed in various methods such as silk screen printing, digital offset printing, and thermal transfer printing.

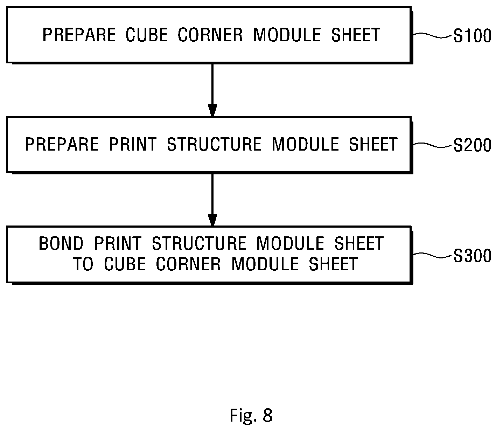

FIG. 8 is a view illustrating a state of operation of the cube corner type retroreflective sheet according to the second embodiment of the present disclosure. Referring to FIG. 8, when external light is incident on the cube corner type retroreflective sheet according to the second embodiment of the present disclosure, the incident light is deprived of UV light as the UV light is absorbed or reflected at the overlay layer 110, and then reaches the print layer 130 as it is diffracted through the hologram layer 120.

A portion of the light a' that reached the print layer 130 passes through while another portion of the light a' that reached the print layer 130 is reflected, wherein a portion of the infrared rays of the light a' that passes through the print layer 130 is absorbed by the infrared ray non-transmissive material.

Further, the whiteness of the reflected light may be enhanced by the whiteness enhancing material included in the print layer 130, and the reflected light may be reflected to outside.

In addition, the light that passed through the print layer 130 becomes incident on the adhesive agent layer 140, and a portion of the infrared rays in the incident light may be absorbed by the infrared ray non-transmissive material included in the adhesive agent layer 140 and the whiteness of the reflected light may be enhanced by the whiteness enhancing material at the same time, and then reflected to outside.

In addition, the light b' that passed through the base layer 210 and became incident on the cube corner element 220 is partially retroreflected, and partially absorbed or refracted.

Specifically, in the region ℓ₁ where the cube corner element 220 is not buried in the adhesive layer 230, through a relatively big difference of refractive index between the air existing in the space 221 and the cube corner element 220, retroreflection occurs.

In addition, in the region ℓ₂ where the cube corner element 220 is buried in the adhesive layer 230, due to a relatively small difference of refractive index (smaller than 0.5) between the cube corner element 220 and the adhesive layer 230, as can be seen from c', the light is transmitted to the adhesive layer 230 or refracted to another direction, and thus substantially almost no retroreflection occurs.

As a result, by configuring the cube corner element 220 to be partially buried in the adhesive layer 230, it is possible to reduce the light being retroreflected, thereby reducing the reflectivity of the retroreflective sheet.

Meanwhile, by the infrared ray non-transmissive material included in the cube corner element 220, the infrared rays of the light incident on the cube corner element 220 may be partially absorbed. Further, in the adhesive layer 230, a portion, albeit a very small amount, of the light may be reflected back and emitted to outside.

When using the cube corner type retroreflective sheet according to the second embodiment of the present disclosure as described above, it is possible to absorb the infrared rays and ultraviolet rays from the light incident from outside and enhance the whiteness at the same time. That is, it is possible to significantly improve the visibility of a license plate from the point of view of the observer.

Meanwhile, in the second embodiment described above, on an upper portion of the cube corner module sheet, a print structure module sheet that includes a print layer is configured, but it is possible to configure only the print layer on the upper portion of the cube corner module sheet instead.

The scope of right of the present disclosure is not limited to the embodiments described above, and the present disclosure may be implemented in various types of embodiments within the claims set attached hereto. Without departing from the gist of the present disclosure claimed in the claims set, it is intended that any person skilled in the art to which the present disclosure pertains falls within the scope of the claims described herein to various extents which can be modified.

### [REFERENCE NUMERALS]

10,210: BASE LAYER
20,120: HOLOGRAM LAYER
30, 130: PRINT LAYER
40, 220 : CUBE CORNER ELEMENT
41, 221 : SPACE
50, 230: ADHESIVE LAYER
60, 240 : RELEASE FILM
100 : PRINT STRUCTURE MODULE SHEET
110: OVERLAY LAYER
140 : ADHESIVE AGENT LAYER
200 : CUBE CORNER MODULE SHEET

## Claims

1. A cube corner type retroreflective sheet having cube corner elements, **characterized in that** the sheet comprises:
a base layer (10);
a print layer (30) arranged at one side of the base layer;
a plurality of cube corner elements (40) that bond to the print layer (30), have a flat observation surface at one surface facing toward the print layer, and have a structure surface at the opposite surface; and
an adhesive layer (50) that bonds to the cube corner elements such that a portion of the structure surface of the cube corner elements is buried.

2. The cube corner type retroreflective sheet according to claim 1, wherein the adhesive layer (50) comprises at least one of a whiteness enhancing material and an infrared ray non-transmissive material.

3. The cube corner type retroreflective sheet according to claim 1, wherein the print layer (30) comprises at least one of a whiteness enhancing material and an infrared ray non-transmissive material.

4. The cube corner type retroreflective sheet according to claim 1, wherein a height of a region where the cube corner element (40) is buried by the adhesive layer is preferably equal to or greater than a height of a region where the cube corner element is not buried.

5. The cube corner type retroreflective sheet according to claim 1, wherein the print layer (30) is arranged between the base layer (10) and the cube corner element (40).

6. The cube corner type retroreflective sheet according to claim 1, wherein a hologram layer (20) is further formed between the base layer (10) and the print layer (30).

7. The cube corner type retroreflective sheet according to claim 1, wherein the base layer (10) is configured to absorb or reflect an ultraviolet ray of incident light.

8. The cube corner type retroreflective sheet according to claim 1, wherein the base layer (10) is provided in a single-layer or multi-layer structure, and an outermost surface is surface-treated to be hydrophilic or hydrophobic.

9. A manufacturing method of a cube corner type retroreflective sheet having cube corner elements, **characterized in that** the method comprises following steps:
forming a base layer (10);
forming a print layer (30) at one side of the base layer (10);
forming a cube corner layer at one side of the print layer (30), and then forming a plurality of cube corner elements (40) having a flat observation surface at one surface facing toward the print layer and having a structure surface at the opposite surface, by using a mold; and
forming an adhesive layer (50) such that a portion at the structure surface side of the cube corner element is buried.

10. The manufacturing method of a cube corner type retroreflective sheet according to claim 9, further comprising forming a hologram layer (20) between the base layer (10) and the print layer (30).
